# EUROPEAN PATENT SPECIFICATION

(11) **EP 0 989 301 B1**
(45) Date of publication and mention of the grant of the patent: **10.05.2006**
(21) Application number: 99203053.6
(22) Date of filing: 20.09.1999
(51) Int. Cl.: F02P 5/15

(54) **Ignition timing control system for an internal combustion engine**
Zündzeitpunktsteuersystem für einen Verbrennungsmotor
Système de commande de synchronisation d'allumage pour moteur à combustion interne

(30) Priority: 22.09.1998 JP 26787398
(43) Date of publication of application: 29.03.2000
(73) Proprietor: Mitsuba Corporation, Kiryu-shi, Gunma-ken (JP)
(72) Inventor: Inaba, Mitsunori, Ashikaga-shi, Tochigi-ken (JP); Nozue, Yutaka, Nitta-Gun, Gunma-ken (JP)
(74) Representative: Browne, Robin Forsythe

(56) References cited:
- WO-A-92/09957
- US-A- 4 730 256
- US-A- 4 896 263
- US-A- 5 247 446
- US-A- 5 497 330
- US-A- 5 787 381

## Description

### TECHNICAL FIELD

The present invention relates to an ignition timing control system for an internal combustion engine and particularly to an ignition timing control system which conducts the ignition timing control based on a program and control data stored in a memory.

### BACKGROUND OF THE INVENTION

Various types of vehicle engine ignition systems are known, such as a coil ignition type system or capacitor discharge ignition (CDI) type system which is suitable for use in molorcycles.

Typically, such engine ignition systems conduct ignition timing control depending on engine rotation speed or the like. In general, the ignition timing control systems can be classified into analogue type systems and digital type systems. In digital type systems, the ignition timing is controlled by a central processing unit (CPU) operating based on the program and control data (also referred to as an ignition map) stored in a memory.

US-A-4 730 256 discloses an ignition timing control system for an internal combustion engine, comprising:
a controller having a memory integrally packaged therewith, the controller operating to output an ignition signal based on a program and control data stored in the memory: and an external rewritable memory (EPROM) which stores the control data and which is connected externally to the controller, wherein the memory of the controller comprises a read/write memory and a read only memory, the program being stored in the ROM, and the controller comprises data transfer control means for, in response to an operating voltage being applied to the controller, transferring the control data stored in the external rewritable memory to the read/write memoryof the controller.

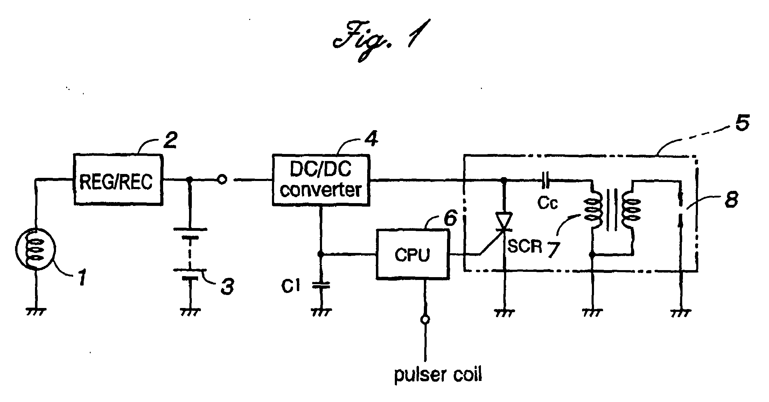

Figure 1 shows a CDI type engine ignition system for conducting such ignition timing control using a CPU. An AC generator 1 is connected to a battery 3 via a regulator/rectifier circuit 2. In this example, a DC/DC converter 4 is used to raise the output voltage from the regulator/rectifier circuit 2 and provide the raised voltage to an ignition unit 5. The DC/DC converter 4 also supplies the voltage to a CPU 6 which provides an ignition signal to the ignition unit 5. Between the DC/DC converter 4 and the CPU 6 is connected a smoothing capacitor C1. A main capacitor Ce in the ignition unit 5 is charged by the raised voltage from the DC/DC converter 4. When the ignition signal from the CPU turns on a thyristor SCR in the ignition unit 5 to discharge the main capacitor Ce. electric current flows through the ignition coil 7, generating a spark from the spark plug 8. Although not shown, a train of signals from a pulser coil are input to the CPU 6 which, in response to these signals, supplies ignition signals to the ignition unit 5 with an appropriate timing.

In order to prevent false operation due to a noise and in order to ensure sufficiently high control speed, it is common that the memory and the CPU are integrally packaged together. (In this specification, the terms "CPU" or "controller" may refer to the integrally packaged CPU and memory.) Such memory may be called a built-in memory and may comprise for example a mask ROM (read only memory) which is low in price but not rewritable.

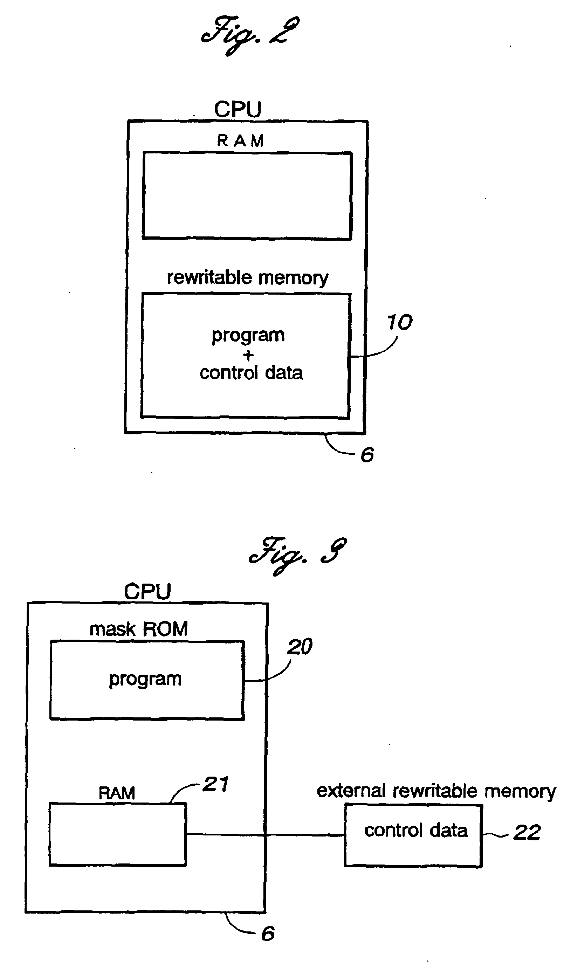

It is desirable in order to achieve optimum ignition timing characteristics that the program and/or control data can be changed depending on the type and/or usage of each engine even if a same CDI circuit is used in different engines. However, if different programs and control data are stored in the mask ROM of the CPUs depending on the engine types or usage, it may complicate the CPU management. Further, sometimes it becomes necessary to fine-adjust the engine ignition characteristics after the installation of the ignition system into the engine, but this is not possible in such a CPU where the program and control data are stored in its mask ROM. For these reasons, it has been known conventionally to use a rewritable memory, such as an EPROM, EEPROM and flash memory, as the memory integrally packaged with the CPU so that both the program and control data arc rewritable. Figure 2 schematically shows such a CPU comprising a rewritable built-in memory 10.

However, such a CPU with a rewritable memory integrally packaged therewith is high in price, and thus not suitable for use in products that are manufactured in large quantities. Further, there were other problems such as that additional steps were necessary for erasing the memory and that due to the program having a huge amount of data, a considerable time was required for rewriting the program and control data in the memory.

### BRIEF SUMMARY OF THE INVENTION

In view of such problems of the prior art, a primary object of the present invention is to provide an ignition timing control system for an internal combustion engine which comprises a CPU for conducting ignition timing control based on a program and control data stored in a memory and which is easily adjustable depending on the type and/or usage of the engine but low in price.

A second object of the present invention is to provide such an ignition timing control system which is adapted for use in motorcycles and can allow quick initiation of the ignition control so as to ensure reliable starting of the engine even when the battery is disconnected and a kick-starter is used in starting the engine.

A third object of the present invention is to provide such an ignition timing control system which can be easily adjusted even after assembly thereof.

According to the present invention, these and other objects can be accomplished by providing an ignition timing control system for an internal combustion engine, comprising:
a controller having a memory integrally packaged therewith, the controller operating to output an ignition signal based on a program and control data stored in the memory; and
an external rewritable memory which stores the control data and which is connected externally to the controller, wherein
the memory of the controller comprises a read/write memory and a read only memory, the program being stored in the read only memory and
the controller comprises data transfer control means for, in response to an operating voltage being applied to the controller, transferring the control data stored in the external rewritable memory to the read/write memory of the controller, characterised by that the read only memory further stores control data necessary for the controller to initiate the ignition timing control, and the controller conducts the ignition timing control using the control data stored in the read only memory until the transfer of the control data from the external rewritable memory to the read/write memory has completed. Typically, the ROM consists of a mask ROM and the read/write memory consists if a random access memory (RAM). In such a case the controller having the memory integrally packaged therewith can be formed on a single semiconductor substrate.

The external rewritable memory preferably consists of an EPROM, EPROM or flash memory.

Thus, since the memory integrally packaged with the controller (or CPU) for storing the program consists of a mask ROM, it is possible to manufacture a controller having an integrally packaged memory at low cost. At the same time, since the control data is stored in the external rewritable memory, it is possible to easily rewrite the control data depending on the type and/or usage of the engine. Because the control data generally contains less amount of data than the program, the time period required for rewriting the data in the external rewritable memory can be significantly reduced than in the prior art rewritable memory integrally packaged with the controller. Thus, according to the present invention, an ignition timing control system for an internal combustion engine is achieved which is cheap and can be easily adjusted depending on the type and/or usage of the engine.

This is particularly advantageous in motorcycles in which when the battery is disconnected for example, it is often necessary to start the engine by operating the kick-starter where the first ignition must take place while the engine rotates one or two turns. Using the fixed control data pre-stored in the read only memory, the controller can immediately initiate the ignition timing control when an operating voltage is supplied thereto without waiting the completion of transfer of control data from the external rewritable memory to the read/write memory of the controller, to thereby ensure reliable engine start even when the kick-starter us used in starting the engine.

In one preferred embodiment of the invention, the control data stored in the external rewritable memory is divided into a plurality of data blocks each having an associated priority level, and the data transfer control means operates so that in the transfer of the control data from the external rewritable memory to the read/write memory, a data block having a higher priority level is transferred earlier. In this embodiment also, using the part (or block) of control data which is transferred immediately upon application of the operating voltage, the controller can quickly initiate the ignition control so that reliable engine start is ensured even when the kick-starter is used in starting the engine of the motorcycle.

Preferably, the controller further comprises a first terminal (SI) for receiving a control data rewriting initiation signal for instructing the controller to initiate rewriting operation of the control data stored in the external rewritable memory, and a second terminal (DI) for reading in control data which is to be written into the external rewritable memory, wherein the read only memory of the controller further stores a program for, in response to the reception of the control data rewriting initiation signal, conducting the reading in of the control data and writing of the read in data into the external rewritable memory. The first and second terminals can be connected to a control data generating system which is used in making the control data. In this way, even after the external rewritable memory is connected to the controller to implement the ignition timing control system, the control data generated by the control data generating system can be easily transferred into the external rewritable memory via the controller.

### BRIEF DESCRIPTION OF THE DRAWINGS

Now the present invention is described in the following with reference to the appended drawings, in which:
Figure 1 is a schematic circuit diagram of a CDI type ignition system which utilizes a CPU in the ignition timing control;
Figure 2 is a schematic diagram of an ignition timing control system un the prior art constituted by a CPU having a rewritable memory integrally packaged thereto;
Figure 3 is a schematic diagram of an ignition timing control system not according to the present invention;
Figure 4 is a timing chart for showing an operation of the ignition timing control system at the starting of the engine;
Figure 5 is a schematic diagram of an ignition timing control system according to a first embodiment of the present invention;
Figure 6 is a flowchart for showing the operation of the ignition timing control system of Figure 5;
Figure 7 is a schematic diagram of an ignition timing control system not according to the present invention;
Figure 8 is a flowchart for showing the operation of the ignition timing control system of Figure 7;
Figure 9 is a schematic diagram of an ignition timing control system according to the present invention which is connected to the control data generating device in order to rewrite the control data in the external rewritable memory; and
Figure 10 is a flowchart for showing an operation for rewriting the control data in the external rewritable memory of the ignition timing control system of the present invention.

### DETAILED DESCRIPTION OF THE PREFERRED EMBODIMENTS

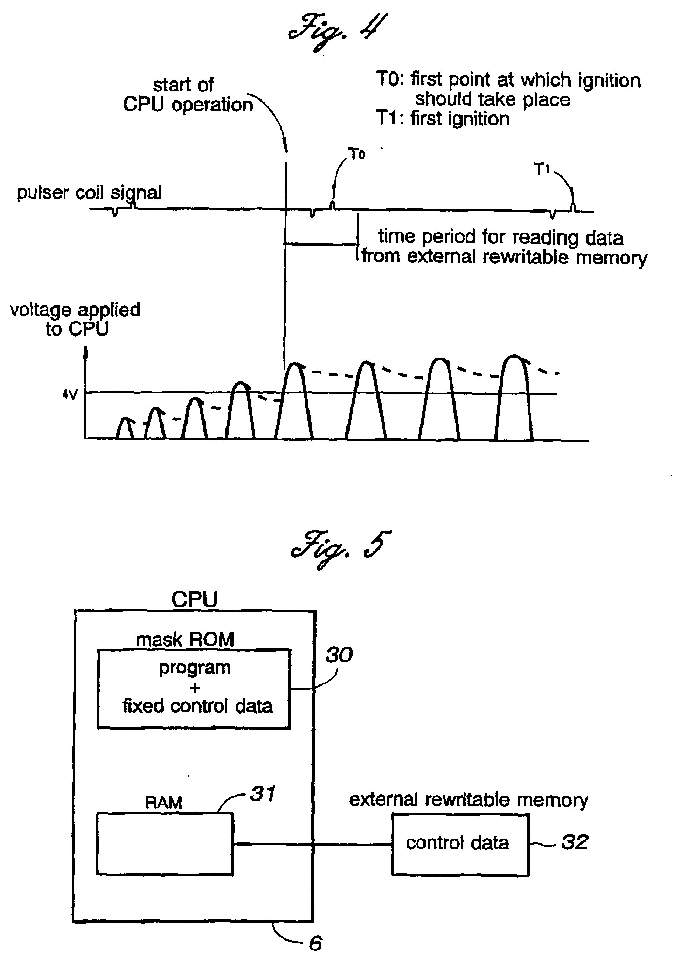

Figure 3 shows an ignition timing control system not according to the present invention. As shown, a CPU 6 comprises a read only memory (ROM) 20 and a read/write memory 21 which integrally packaged therewith. The ROM 20 consists of for example a mask ROM while the read/write memory 21 typically consists of a random access memory (RAM). The CPU 6 comprising the memories 20 and 21 can be implemented as a one-chip CPU formed on a single semiconductor substrate. The mask ROM stores a program which is used in the ignition timing control. The control data is stored in an external rewritable memory 22. This rewritable memory 22 can consist of for example an EEPROM. Thus, although the program stored in the mask ROM 20 is not rewritable, the rewritable control data can allow satisfactory adjustment of the ignition characteristics depending on the type and/or usage of the engine.

When the CPU 6 is supplied with an operating voltage (4V in this embodiment) by using a battery 3 or by operating a kick-starter to start the engine, the CPU begins to read (or transfer) the control data stored in the external rewritable memory 22 into the RAM 21. Thus, the CPU 6 comprises data transfer control means for, upon detection of the operating voltage, initiating the transfer of the control data. The data transfer from the external rewritable memory 22 to the RAM 21 of the CPU 6 is typically conducted by serial data transfer. When the transfer of the control data into the RAM 21 has completed, the CPU 6 begins to conduct the ignition timing control.

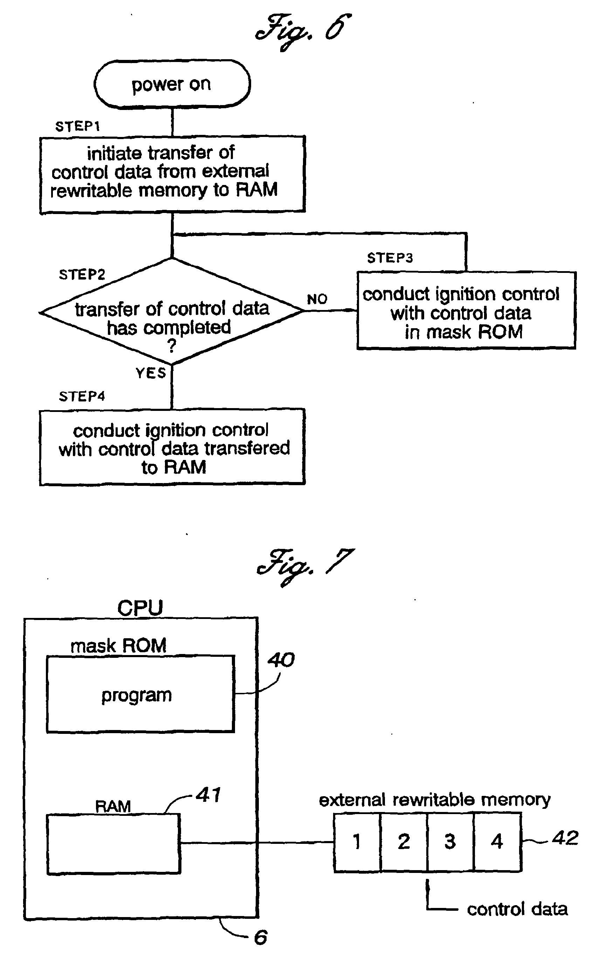

Such operational timing in initiating the ignition control is shown in Figure 4, in which the solid line represents an output voltage of the DC/DC converter 4 which changes with the change in the output voltage from the AC generator, while the dotted line represents a voltage which has been smoothed by the smoothing capacitor C1 to be applied to the CPU 6. As shown in the drawing, when the operating voltage is generated from the AC generator 1 as a result of for example operating a kick-starter and causing engine rotation, the control data is transferred (or read) into the RAM 21 from the external rewritable memory 22. When the data transfer has completed, the CPU 6 initiates the ignition timing control. Specifically, at the first appropriate timing (T1) after the control data transfer has completed, the CPU 6 outputs an ignition signal to thereby cause the first ignition.

Thus, since the part of the memory integrally packaged with the CPU for storing the program consists of a mask ROM, it is possible to manufacture a CPU having an integrally packaged memory at low cost. At the same time, since the control data is stored in the external rewritable memory, it is possible to easily rewrite the control data depending on the type and/or usage of the engine. Because the control data-generally contains considerably less amount of data than the program, the time period required for rewriting the data in the external rewritable memory can be significantly reduced that in the prior art rewritable memory integrally packaged with the CPU. Thus according to the present invention an ignition timing control system for an internal combustion engine is provided which is cheap and can be easily adjusted depending on the type and/or usage of the engine.

In this system, however, as described above, since the data transfer from the external rewritable memory 22 to the RAM 21 of the CPU 6 is conducted by the serial data transfer, the data transfer requires relatively long period of time. In this case where it is necessary to start the engine by operating a kick-starter since the battery is disconnected for example, the ignition control must be started while the engine rotates one or two turns, however, in this system, the data transfer to the RAM requires a long period of time, causing a delay to the initiation of the ignition control and thus making it difficult to start the engine. This is shown in Figure 4 by the initiation of the ignition control at the point T1, not at the point T0.

In the following, an embodiment of the invention is disclosed which can solve the above problem.

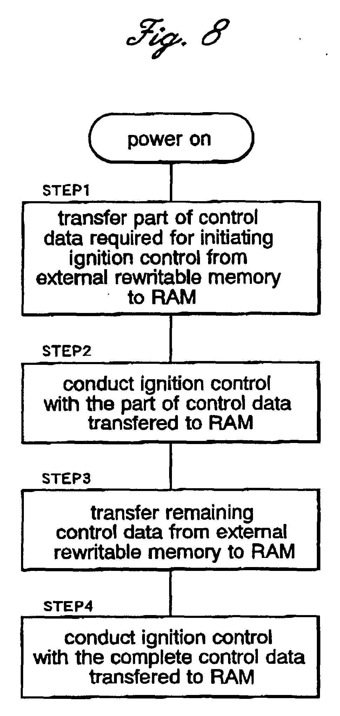

Figure 5 shows a first embodiment of an ignition timing control system according to the invention, the CPU 6 comprises a mask ROM 30 and a RAM 31 and the control data is stored in an external rewritable memory 32. However, in this embodiment of the invention, the mask ROM 30 stores not only the program but also fixed control data. The fixed control data is a minimum data required for the CPU 6 to conduct the ignition timing control, and this can be invariable with the type and/or usage of the engine. In other words, the fixed control data may not allow optimum ignition timing characteristics adjusted for the type and/or usage of the engine to be attained, but enables the CPU 6 to initiate the ignition timing control.

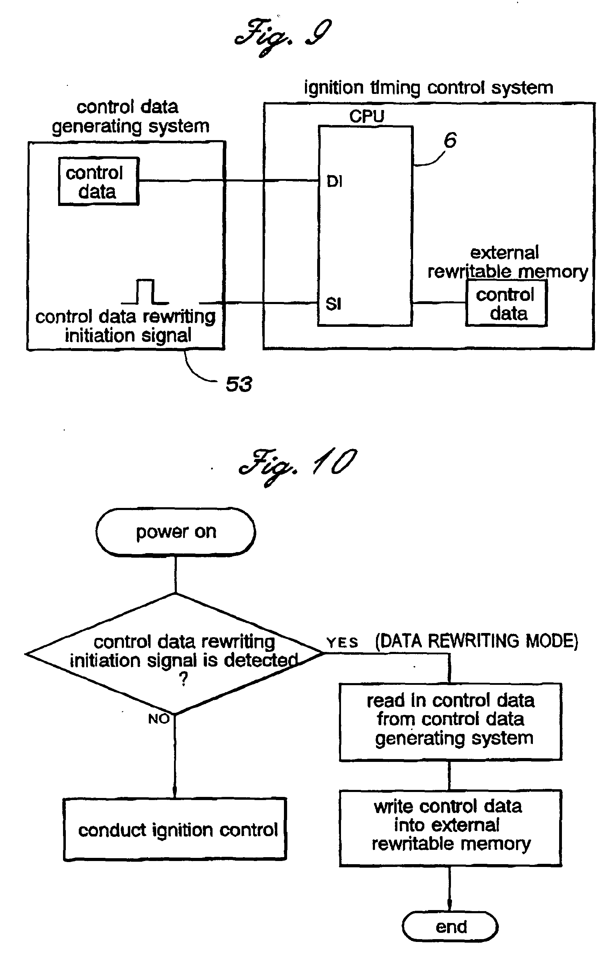

Thus, in the first embodiment of the invention, when the operating voltage is applied, the CPU 6 can immediately initiate the ignition timing control using the fixed control data, and thus even when the battery is disconnected and the engine is started by operating the kick-starter, a reliable start of the engine can be achieved. Once the data transfer from the external rewritable memory 32 to the RAM 31 of the CPU 6 has completed, the CPU 6 begins to conduct the ignition timing control using the transferred data so that the optimum ignition characteristics adjusted for the type and/or usage of the engine are achieved. The flowchart of Figure 6 shows such a flow of operation.

Next, referring to Figure 7, a further ignition timing control system which is not according to the invention is described. As shown in the drawing, a mask ROM 40 stores only the program. However, the control data stored in an external rewritable memory 42 is divided into a plurality (four for example) of blocks each having an associated priority level. The priority level of the blocks 1, 2, 3, 4 decreases in this order for example. The block 1 having the highest priority level comprises only a minimum data required for initiating the ignition to start the engine.

Upon application of the operating voltage, the CPU 6 reads only the block 1 into the RAM 41. Since the block 1 has a small amount of data, the CPU 6 can immediately output an ignition signal to start the engine. The other data blocks are read in sequentially after the engine has been started, and used by the CPU 6 in conducting the ignition timing control. Although the control data is divided into four blocks, the control data may be divided into only two blocks, one for initiating the ignition control and the other for other data. The flowchart of Figure 8 shows such a flow of operation.

Next, a preferable embodiment for storing (writing) the control data into the external rewritable memory in the engine ignition timing control system according to the present invention is explained.

According to this embodiment, the CPU 6 in the ignition timing control system is provided with a terminal DI for reading the control data from a control data generating system 53, which is used in making the control data, and a signal input terminal SI for receiving a control data rewriting initiation signal for instructing the CPU 6 to rewrite the control data in the external rewritable memory (22, 32, 42).

Further, in addition to the program for controlling the ignition timing, the ROM of the CPU 6 stores a program for reading the control data from the control data generating system 53 and writing the read in control data into the external rewritable memory.

Referring to Figure 9, in order to rewrite the control data, the CPU 6 of the ignition timing control system and the control data generating system 53 are connected to each other as shown in the drawing, and when the CPU 6 is brought into an operating state by applying an operating voltage (not shown in the drawing) to the ignition timing control system, the control data rewriting initiation signal is provided from the control data generating system 53 to the signal terminal SI of the CPU 6. Upon detecting the signal, the CPU 6 executes the data rewriting mode program (Figure 10). In other words, the CPU 6 reads in the control data from the control data generating system 53 through the terminal DI, and writes the read in data into the external rewritable memory.

In this way, after connecting the external rewritable memory to the CPU to assemble the ignition timing control system, an optimum data adapted for the type of each individual vehicle can be stored into the external rewritable memory immediately before incorporating the ignition timing control system into the vehicle body. According to the present invention, before the data transfer from the external rewritable memory to the RAM in the CPU has completed, the fixed control data pre-stored in the mask ROM allows the engine ignition control to be conducted immediately after the application of operating voltage to the CPU, so that even when the battery is disconnected and the engine is started by operating the kick-starter, the engine can be reliably started.

The present invention has been described in terms of preferred embodiments thereof. These embodiments were shown for illustrative purposes and should not be recognized as restricting the present invention. It will be obvious to a person skilled in the art that various alternations and modifications are possible without departing from the scope of the present invention which is set forth in the claims.

## Claims

1. An ignition timing control system for an internal combustion engine, comprising:
a controller (6) having a memory integrally packaged therewith, the controller operating to output an ignition signal based on a program and control data stored in the memory; and
an external rewritable memory (22, 32, 42) which stores the control data and which is connected externally to the controller (6), wherein
the memory of the controller comprises a read/write memory (21, 31, 41) and a read only memory (20, 30, 40), the program being stored in the read only memory (20, 30, 40), and
the controller (6) comprises data transfer control means for, in response to an operating voltage being applied to the controller (6), transferring the control data stored in the external rewritable memory (22, 32, 42) to the read/write memory (21, 31, 41) of the controller (6), **characterised by** that the read only memory further stores control data necessary for the controller (6) to initiate the ignition timing control, and the controller (6) conducts the ignition timing control using the control data stored in the read only memory (30) until the transfer of the control data from the external rewritable memory (32) to the read/write memory (31) has completed.

2. An ignition timing control system according to Claim 1, wherein the read only memory (20, 30, 40) consists of a mask ROM (20, 30, 40) and the read/write memory (21, 31, 41) consists of a random access memory (21, 31, 41).

3. An ignition timing control system according to Claim 1, wherein the control data stored in the external rewritable memory (42) is divided into a plurality of data blocks each having an associated priority level, and the data transfer control means operates so that in the transfer of the control data from the external rewritable memory (42) to the read/write memory (41), a data block having a higher priority level is transferred earlier.

4. An ignition timing control system according to Claim 1, wherein the controller (6) further comprises a first terminal (SI) for receiving a control data rewriting initiation signal for instructing the controller (6) to initiate rewriting operation of the control data stored in the external rewritable memory (22, 32, 42), and a second terminal (DI) for reading in control data which is to be written into the external rewritable memory (22, 32, 42),
and wherein the read only memory (20, 30, 40) of the controller (6) further stores a program for, in response to the reception of the control data rewriting initiation signal, conducting the reading in of the control data and writing of the read in data into the external rewritable memory (22, 32, 42).

5. An ignition timing control system according to Claim 1, wherein the external rewritable memory (22, 32, 42) comprise a member selected from the group consisting of an EPROM, EEPROM and flash memory.

6. An ignition timing control system according to Claim 2, wherein the controller (6) having a memory integrally packaged therewith is formed on a single semiconductor substrate.

## Patentansprüche

1. Zündzeitpunktsteuersystem für einen Verbrennungsmotor, umfassend:
eine Steuerung (6) mit einem darin integrierten Speicher, wobei die Steuerung (6) betrieben wird, dass ein Zündsignal auf Grundlage eines Programms und Steuerdaten, die im Speicher gespeichert sind, ausgegeben wird; und
einen externen, wieder beschreibbaren Speicher (22, 32, 42), der die Steuerdaten speichert und der extern mit der Steuerung (6) verbunden ist, worin
der Speicher der Steuerung (6) einen Lese-/Schreibspeicher (21, 31, 41) und einen Nur-Lesespeicher (20, 30, 40) umfasst, wobei das Programm im Nur-Lesespeicher (20, 30, 40) gespeichert ist, und
die Steuerung (6) Datenübertragungssteuermittel aufweist zur Übertragung der Steuerdaten, die in dem externen, wieder beschreibbaren Speicher (22, 32, 42) gespeichert sind, in Reaktion auf eine Betriebsspannung, die an die Steuerung (6) angelegt wird, an den Lese-/Schreibspeicher (21, 31, 41) der Steuerung (6), **dadurch gekennzeichnet, dass** der Nur-Lesespeicher ferner Steuerdaten speichert, die zur Auslösung der Zündzeitpunktsteuerung für die Steuerung (6) notwendig sind, und dass die Steuerung (6) die Zündzeitpunktsteuerung unter Verwendung der Steuerdaten, die in dem Nur-Lesespeicher (30) gespeichert sind, durchführt, bis die Übertragung der Steuerdaten aus dem externen, wieder beschreibbaren Speicher (32) zum Lese-/Schreibspeicher (31) abgeschlossen ist.

2. Zündzeitpunktsteuersystem gemäß Anspruch 1, worin der Nur-Lesespeicher (20, 30, 40) aus einem Masken-ROM (20, 30, 40) besteht, und der Lese-/Schreibspeicher (21, 31, 41) aus einem Speicher mit wahlfreiem Zugriff (21, 31, 41) besteht.

3. Zündzeitpunktsteuersystem gemäß Anspruch 1, worin die Steuerdaten, die im externen, wieder beschreibbaren Speicher (42) gespeichert sind, in mehrere Datenblöcke aufgeteilt sind, die jeweils eine zugehörige Prioritätsstufe aufweisen, und die Datenübertragungssteuermittel derart betrieben werden, dass bei der Übertragung der Steuerdaten von dem externen, wieder beschreibbaren Speicher (42) zum Lese-/Schreibspeicher (41) ein Datenblock mit höherer Priorität früher übertragen wird.

4. Zündzeitpunktsteuersystem gemäß Anspruch 1, worin die Steuerung (6) ferner einen ersten Anschluss (SI) für den Empfang eines Steuerdaten-Wiederschreib-Auslösesignals, um die Steuerung (6) zu veranlassen, den Wiederschreibbetrieb der Steuerdaten, die im externen, wieder beschreibbaren Speicher (22, 32, 42) gespeichert sind, auszulösen, und einen zweiten Anschluss (DI) für das Einlesen von Steuerdaten, die in den externen, wieder beschreibbaren Speicher (22, 32, 42) zu schreiben sind, umfasst
und worin der Nur-Lesespeicher (20, 30, 40) der Steuerung (6) ferner ein Programm für, in Reaktion auf den Empfang des Steuerdaten-Wiederschreib-Auslösesignals, das Einlesen der Steuerdaten und das Schreiben der eingelesenen Daten in den externen, wieder beschreibbaren Speicher (22, 32, 42) speichert.

5. Zündzeitpunktsteuersystem gemäß Anspruch 1, worin der externe, wieder beschreibbare Speicher (22, 32, 42) eine Element umfasst, das aus der aus einem EPROM, EEPROM und Flash-Speicher bestehenden Gruppe ausgewählt ist.

6. Zündzeitpunktsteuersystem gemäß Anspruch 2, worin die Steuerung (6) mit einem darin integrierten Speicher auf einem einzelnen Halbleitersubstrat ausgebildet ist.

## Revendications

1. Système de commande de synchronisation d'allumage pour un moteur à combustion interne, comprenant :
un contrôleur (6) comportant une mémoire intégrée dans celui-ci, le contrôleur fonctionnant pour délivrer un signal d'allumage sur la base d'un programme et de données de commande mémorisés dans la mémoire ; et
une mémoire réinscriptible externe (22, 32, 42) qui mémorise les données de commande et qui est connectée extérieurement au contrôleur (6), dans lequel
la mémoire du contrôleur comprend une mémoire à lecture/écriture (21, 31, 41) et une mémoire à lecture seule (20, 30, 40), le programme étant mémorisé dans la mémoire à lecture seule (20, 30, 40), et
le contrôleur (6) comprend des moyens de commande de transfert de données pour, en réponse à l'application d'une tension de fonctionnement au contrôleur (6), transférer les données de commande mémorisées dans la mémoire réinscriptible externe (22, 32, 42) vers la mémoire à lecture/écriture (21, 31, 41) du contrôleur (6), **caractérisé en ce que** la mémoire à lecture seule mémorise en outre des données de commande nécessaires pour que le contrôleur (6) lance la commande de synchronisation d'allumage, et le contrôleur (6) effectue la commande de synchronisation d'allumage en utilisant les données de commande mémorisées dans la mémoire à lecture seule (30) jusqu'à ce que le transfert des données de commande de la mémoire réinscriptible externe (32) vers la mémoire à lecture/écriture (31) soit achevé.

2. Système de commande de synchronisation d'allumage selon la revendication 1, dans lequel la mémoire à lecture seule (20, 30, 40) consiste en une mémoire morte à masque (20, 30, 40) et la mémoire à lecture/écriture (21, 31, 41) consiste en une mémoire à accès aléatoire (21, 31, 41).

3. Système de commande de synchronisation d'allumage selon la revendication 1, dans lequel les données de commande mémorisées dans la mémoire réinscriptible externe (42) sont divisées en une pluralité de blocs de données ayant chacun un niveau de priorité associé, et les moyens de commande de transfert de données fonctionnent de sorte que, lors du transfert des données de commande de la mémoire réinscriptible externe (42) vers la mémoire à lecture/écriture (41), un bloc de données ayant un niveau de priorité plus élevé soit transféré plus tôt.

4. Système de commande de synchronisation d'allumage selon la revendication 1, dans lequel le contrôleur (6) comprend en outre une première borne (S1) pour recevoir un signal de lancement de réécriture de données de commande pour demander au contrôleur (6) de lancer une opération de réécriture des données de commande mémorisées dans la mémoire réinscriptible externe (22, 32, 42), et une deuxième borne (D1) pour récupérer les données de commande qui doivent être écrites dans la mémoire réinscriptible externe (22, 32, 42),
et dans lequel la mémoire à lecture seule (20, 30, 40) du contrôleur (6) mémorise en outre un programme pour, en réponse à la réception du signal de lancement de réécriture de données de commande, effectuer la récupération des données de commande et l'écriture des données récupérées dans la mémoire réinscriptible externe (22, 32, 42).

5. Système de commande de synchronisation d'allumage selon la revendication 1 , dans lequel la mémoire réinscriptible externe (22, 32, 42) comprend un élément sélectionné dans le groupe consistant en une EPROM, une EEPROM et une mémoire flash.

6. Système de commande de synchronisation d'allumage selon la revendication 2, dans lequel le contrôleur (6) dans lequel une mémoire est intégrée est formé sur un substrat semi-conducteur unique.
